# EUROPEAN PATENT APPLICATION

(11) **EP 4 756 592 A1**
(43) Date of publication of application: **10.06.2026**
(21) Application number: 24849563.2
(22) Date of filing: 30.07.2024
(51) Int. Cl.: G06F 3/0482, G06F 3/04817, G06F 3/04842, G06F 3/04883, G06F 3/041

(54) **ELECTRONIC DEVICE FOR GROUPING AND PROVIDING PLURALITY OF FUNCTIONS AND CONTROL METHOD THEREFOR**

(30) Priority: 03.08.2023 KR 20230101555; 02.11.2023 KR 20230149801
(71) Applicant: Samsung Electronics Co., Ltd., Suwon-si, Gyeonggi-do 16677 (KR)
(72) Inventor: CHUNG, Jinkyo, Suwon-si Gyeonggi-do 16677 (KR); KIM, Jungmi, Suwon-si Gyeonggi-do 16677 (KR); SUH, Haebahremahram, Suwon-si Gyeonggi-do 16677 (KR); AN, Jinwan, Suwon-si Gyeonggi-do 16677 (KR); CHUNG, Heeyoung, Suwon-si Gyeonggi-do 16677 (KR)
(74) Representative: HGF
(86) International application number: PCT/KR2024/011118
(87) International publication number: WO 2025/028996

(57) **Abstract**

Disclosed are an electronic device for grouping and providing a plurality of functions and a control method therefor. The electronic device according to an embodiment of the present document comprises a touch screen display and at least one processor, wherein the at least one processor may be configured to: display, through the touch screen display, a plurality of functions executed by at least one application; obtain, through the touch screen display, a first user input with respect to any one function among the plurality of functions; and display, on the touch screen display, a first execution screen related to the any one function on the basis of the first user input.

## Description

### [Technical Field]

The disclosure relates to an electronic device providing a plurality of grouped functions and a control method thereof.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through wearable devices are evolving more and more.

### [Detailed Description of the Invention]

### [Technical Problem]

According to a conventional application system, in order for a user to perform a required task (e.g., video making), the user should execute at least one application for performing at least one function (e.g., at least one of a video recording function, a gallery application execution function, and a text insertion function) specified for performing the task, terminate the running application, and execute another application to find and execute the required function. In other words, the conventional application system had a fragmented structure related to task execution.

According to an embodiment of the disclosure, an electronic device capable of providing a continuous user experience related to task performance may be provided by displaying a function included in a specified application as a shortcut icon and grouping related shortcut icons to provide the grouped shortcut icons to the user.

According to an embodiment of the disclosure, a control method of an electronic device capable of providing a continuous user experience related to task performance may be provided by displaying a function included in a specified application as a shortcut icon and grouping related shortcut icons to provide the grouped shortcut icons to the user.

According to an embodiment of the disclosure, an electronic device capable of providing a new user experience related to task performance may be provided by providing a recommended function for performing a task to the user along with a plurality of grouped functions.

According to an embodiment of the disclosure, a control method of an electronic device capable of providing a new user experience related to task performance may be provided by providing a recommended function for performing a task to the user along with a plurality of grouped functions.

### [Technical Solution]

An electronic device according to an embodiment of the disclosure includes a touch screen display and at least one processor, wherein the at least one processor displays a plurality of functions executable by at least one application via the touch screen display, the plurality of functions include a function executed in relation to a task at least once for performing one task, obtains a first user input for one function among the plurality of functions via the touch screen display, and is configured to display a first execution screen related to the one function on the touch screen display based on the first user input, and at least one function other than the one function among the plurality of functions may be displayed as a specified first visual object via the touch screen display while the first execution screen related to the one function is displayed.

A method of controlling an electronic device according to an embodiment of the disclosure includes an operation of displaying a plurality of functions executable by at least one application via a touch screen display of the electronic device, wherein the plurality of functions include a function executed in relation to a task at least once for performing one task, an operation of obtaining a first user input for one function among the plurality of functions via the touch screen display, and an operation of displaying a first execution screen related to the one function on the touch screen display based on the first user input, and at least one function other than the one function among the plurality of functions may be displayed as a specified first visual object via the touch screen display while the first execution screen related to the one function is displayed.

### [Advantageous Effects]

According to an embodiment of the disclosure, an electronic device capable of providing a continuous user experience related to task performance may be provided by displaying a function included in a specified application as a shortcut icon and grouping related shortcut icons to provide the grouped shortcut icons to the user.

### [Brief Description of Drawings]

FIG. 1 is a block diagram illustrating an electronic device in a network environment according to various embodiments of the disclosure.
FIG. 2 is an example view illustrating a function or operation of an electronic device 101 according to an embodiment of the disclosure that may provide a continuous user experience for performing a task by providing at least one function related to task performance to the user.
FIGS. 3A, 3B, 3C, and 3D are example views illustrating a function or operation in which at least one function is displayed as a shortcut icon according to an embodiment of the disclosure.
FIG. 4 is an example view illustrating a function or operation in which an electronic device 101 according to an embodiment of the disclosure determines whether there are a plurality of functions associated for performing one task.
FIGS. 5A, 5B, and 5C are example views illustrating a plurality of associated functions according to an embodiment of the disclosure.
FIGS. 6A and 6B are example views illustrating a function or operation in which a plurality of grouped functions are displayed at a specified position of a home screen according to an embodiment of the disclosure.
FIG. 6C is an example view illustrating a function or operation in which an order determined based on usage frequency is displayed for a plurality of grouped functions according to an embodiment of the disclosure.
FIG. 7A is an example view illustrating a function or operation in which a specified function is executed according to a selection input for the specified function according to an embodiment of the disclosure.
FIG. 7B is an example view illustrating a function or operation in which a function other than a currently executing function among a plurality of grouped functions is displayed according to a user input according to an embodiment of the disclosure.
FIG. 7C is an example view illustrating a function or operation in which an icon indicating a function other than a currently executing function among a plurality of grouped functions is provided in a floating manner according to an embodiment of the disclosure.
FIG. 7D is an example view illustrating a function or operation in which an icon indicating a function other than a currently executing function among a plurality of grouped functions is displayed according to an embodiment of the disclosure.
FIG. 8 is an example view illustrating a function or operation in which an electronic device 101 according to an embodiment of the disclosure provides a recommended function based on a usage frequency of a specified function.
FIGS. 9A and 9B are example views illustrating the function or operation illustrated in FIG. 8 from a user interface perspective.
FIG. 10 is an example view illustrating a function or operation in which an electronic device 101 according to an embodiment of the disclosure displays a plurality of grouped functions on a home screen in an area other than a specified area of the home screen based on a user input for the plurality of grouped functions.
FIGS. 11A and 11B are example views illustrating the function or operation illustrated in FIG. 10 from a user interface perspective.
FIG. 12 is an example view illustrating a function or operation in which an electronic device 101 according to an embodiment of the disclosure displays a provision history for a plurality of grouped functions.
FIGS. 13A, 13B, 13C, 13D, and 13E are example views illustrating an operation in which an electronic device 101 according to an embodiment of the disclosure generates and arranges a shortcut icon according to a user input.
FIG. 14 is an example view illustrating an operation in which an electronic device 101 according to an embodiment of the disclosure generates a shortcut icon using artificial intelligence.

### [Mode for Carrying out the Invention]

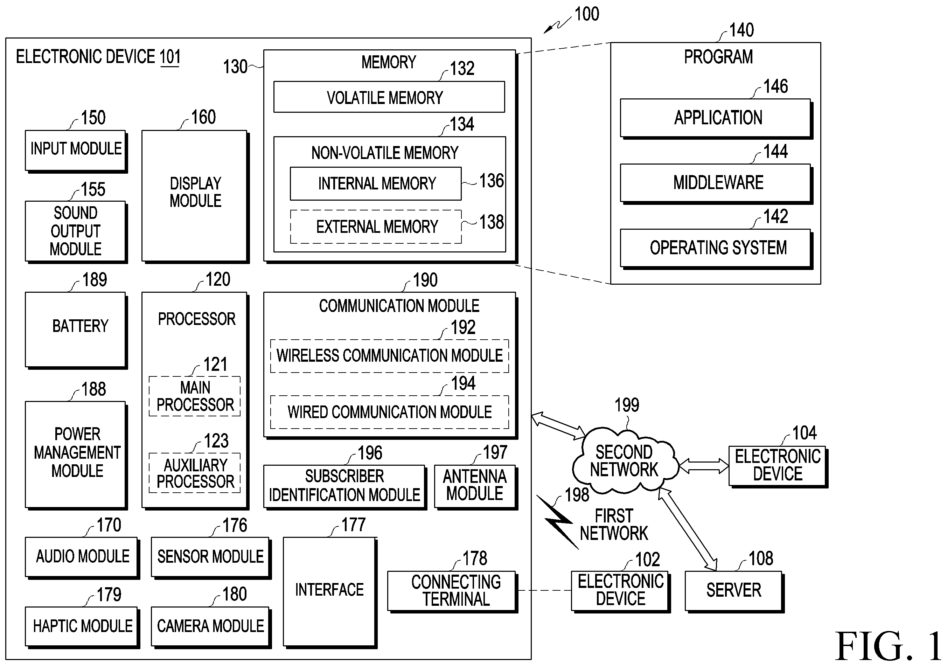

FIG. 1 is a block diagram illustrating an electronic device 101 in a network environment 100, according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mm Wave antenna module. According to an embodiment, the mm Wave antenna module may include a printed circuit board, a RFIC disposed on a first surface (e.g., the bottom surface) of the printed circuit board, or adjacent to the first surface and capable of supporting a specified high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the specified high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

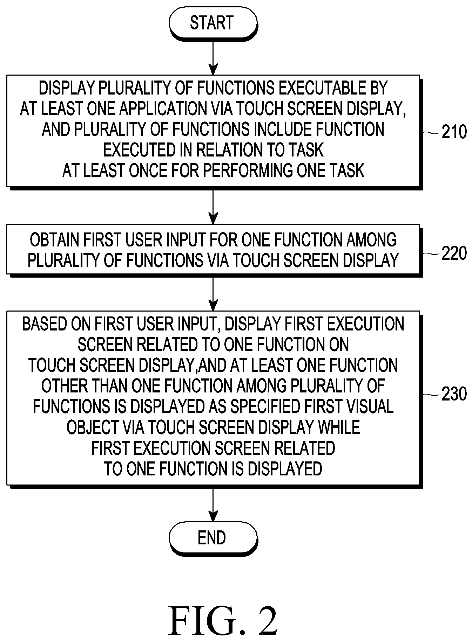

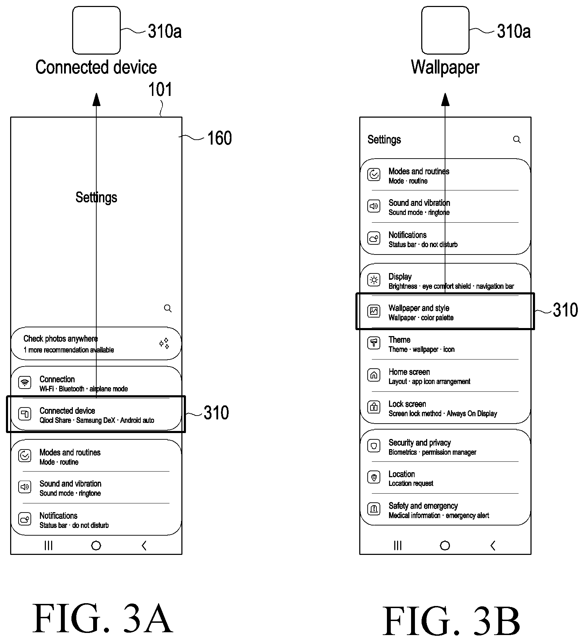

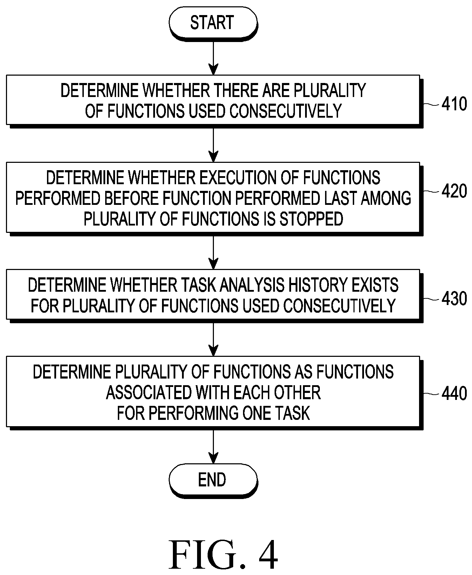

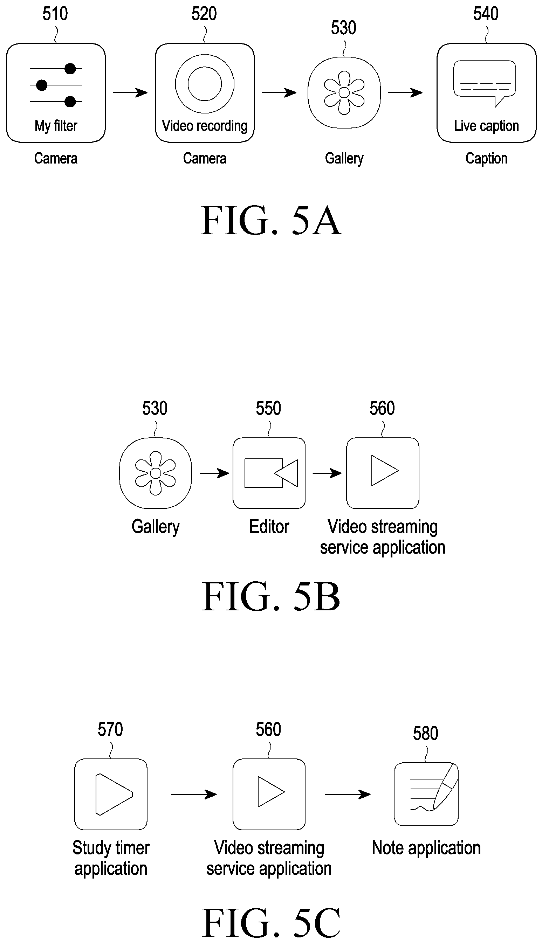

FIG. 2 is an example view illustrating a function or operation of an electronic device 101 according to an embodiment of the disclosure that may provide a continuous user experience for performing a task by providing at least one function related to task performance to the user. FIGS. 3A to 3D are example views illustrating a function or operation in which at least one function is displayed as a shortcut icon according to an embodiment of the disclosure. FIG. 4 is an example view illustrating a function or operation in which an electronic device 101 according to an embodiment of the disclosure determines whether there are a plurality of functions associated for performing one task. FIGS. 5A to 5C are example views illustrating a plurality of associated functions according to an embodiment of the disclosure.

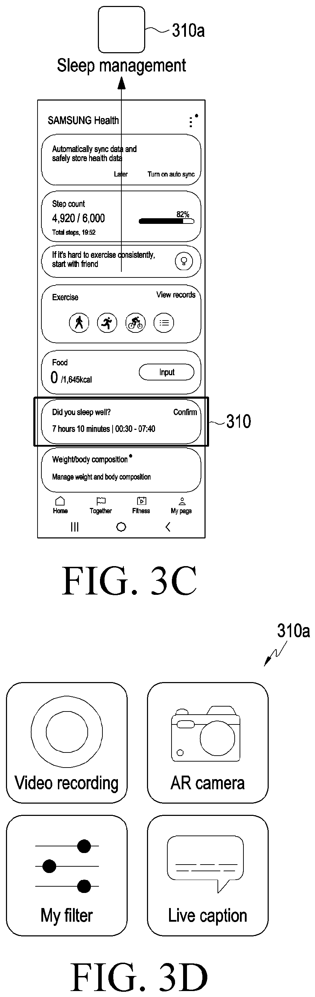

Referring to FIG. 2, an electronic device 101 according to an embodiment of the disclosure may display, in operation 210, a plurality of functions (e.g., a video recording function) executable by at least one application (e.g., a camera application) via a touch screen display (e.g., a display module 160). The plurality of functions according to an embodiment of the disclosure may include a function executed in relation to a task at least once for performing one task. For example, when the at least one application is an internet application, the plurality of functions may include a "new tab" function for displaying a new window, a "new secret tab" in which a search history is not stored, and a "search" function for searching a specific website. Alternatively, as illustrated in FIG. 3A, when the at least one application is a "sharing application," a specific function 310 may include a "connected device" function illustrating a device currently connected to the electronic device 101. Alternatively, as illustrated in FIG. 3B, when the at least one application is a "settings application," a specific function 310 may include a "wallpaper" function for changing a background screen of the electronic device 101. Alternatively, as illustrated in FIG. 3C, when the at least one application is a "health application," a specific function 310 may include a "sleep management" function for setting sleep time of the user. The plurality of functions according to an embodiment of the disclosure may be displayed as a shortcut icon 310a via a touch screen display (e.g., the display module 160), as illustrated in FIG. 3D. The electronic device 101 (e.g., the processor 120) according to an embodiment of the disclosure may extract a specific function (e.g., display a shortcut icon indicating a specific function) through a shortcut API associated with at least one application (e.g., a camera application). According to an embodiment of the disclosure, a specific function 310 may be displayed as at least one item around an application shortcut icon according to a user input (e.g., a long touch gesture) on the application shortcut icon. In the disclosure, the term one "function" may be used interchangeably/alternatively with the term one "task," and in this case, the at least one "task" may refer to one component constituting a "context of use (e.g., video making)" of the user. The electronic device 101 according to an embodiment of the disclosure may determine whether the plurality of functions are associated with each other for performing a specific task. In other words, the electronic device 101 according to an embodiment of the disclosure may determine whether the plurality of functions are functions executed in relation to a task at least once for performing one task. Referring to FIG. 4, the electronic device 101 according to an embodiment of the disclosure may determine, in operation 410, whether there are a plurality of functions used consecutively. For example, the electronic device 101 according to an embodiment of the disclosure may identify that an augmented reality camera function is executed within a specified time after a video recording function is executed, a filter function is executed within a specified time, and finally a caption function is executed. In this case, the electronic device 101 according to an embodiment of the disclosure may determine that a "video recording function," an "augmented reality camera function," a "filter function," and a "caption function" are a plurality of functions used consecutively. In this case, the electronic device 101 according to an embodiment of the disclosure may determine that functions used more than a specified number of times (e.g., two times) are a plurality of functions used consecutively. Referring to FIG. 5A, the electronic device 101 according to an embodiment of the disclosure may identify that a filter function (e.g., a first function 510) provided by a camera application is executed and a video recording function (e.g., a second function 520) provided by the camera application is executed. Subsequently, the electronic device 101 according to an embodiment of the disclosure may identify that a gallery application 530 is executed and a caption function (e.g., a third function 540) provided by the gallery application is executed. In this case, the electronic device 101 according to an embodiment of the disclosure may determine that the filter function, the video recording function, and the caption function are a plurality of functions used consecutively. Referring to FIG. 5B, when a gallery application 530 is executed, an editing application 550 is executed, and then a video streaming service application 560 is executed, the electronic device 101 according to an embodiment of the disclosure may determine that at least one function performed through the gallery application, at least one function executed through the editing application, and at least one function executed through the video streaming service application are a plurality of functions used consecutively. Referring to FIG. 5C, when a study timer application 570 for identifying study time for learning is executed, a video streaming service application 560 is executed, and then a note application 580 is executed, the electronic device 101 may determine that at least one function (e.g., a study time check function) provided by the study timer application 570, at least one function (e.g., a video streaming function) provided by the video streaming service application 560, and a note function provided by the note application 580 are a plurality of functions used consecutively. The electronic device 101 according to an embodiment of the disclosure may determine that an application and/or function executed due to occurrence of a specific event between the plurality of functions (e.g., when an SMS application is executed due to reception of a text message while using an "augmented reality camera function") is a function not included in the plurality of functions used consecutively. The electronic device 101 according to an embodiment of the disclosure may determine, in operation 420, whether execution of functions (e.g., the "video recording function," the "augmented reality camera function," and the "filter function") performed before a function performed last (e.g., the "caption function") among the plurality of functions (e.g., the "video recording function," the "augmented reality camera function," the "filter function," and the "caption function") is stopped. The electronic device 101 according to an embodiment of the disclosure may determine that execution is stopped when a specific function is not being executed in the foreground even though the specific function is being executed in the background. Alternatively, the electronic device 101 according to an embodiment of the disclosure may determine that execution is not stopped even when a specific function is being executed in the background. The electronic device 101 according to an embodiment of the disclosure may determine, in operation 430, whether a task analysis history is present for the plurality of functions (e.g., the "video recording function," the "augmented reality camera function," the "filter function," and the "caption function") used consecutively. When a task analysis history is present for the plurality of functions (e.g., the "video recording function," the "augmented reality camera function," the "filter function," and the "caption function"), the electronic device 101 according to an embodiment of the disclosure may determine a specific task associated with the plurality of functions (e.g., the "video recording function," the "augmented reality camera function," the "filter function," and the "caption function") based on the task existence history. When there is no task analysis history, the electronic device 101 according to an embodiment of the disclosure may newly determine (e.g., infer) a task related to the plurality of functions (e.g., the "video recording function," the "augmented reality camera function," the "filter function," and the "caption function"). The electronic device 101 according to an embodiment of the disclosure may determine a specific task (e.g., video making) related to the plurality of functions (e.g., the "video recording function," the "augmented reality camera function," the "filter function," and the "caption function") using information such as a lookup table defining an association between the plurality of functions and the task, stored in the electronic device 101 or a server operably connected to the electronic device 101. For example, when a ratio matching the plurality of functions performed by the user among the plurality of functions defined in the lookup table is greater than or equal to a specified ratio (e.g., 75%) (e.g., when the "augmented reality camera function," the "filter function," and the "caption function" among the functions performed by the user match each other), the electronic device 101 according to an embodiment of the disclosure may determine that the plurality of functions performed by the user are functions for performing the task defined in the lookup table. Alternatively, the electronic device 101 according to an embodiment of the disclosure may determine (e.g., estimate) a specific task (e.g., video making) using an artificial intelligence model (e.g., a deep neural network (DNN), a convolutional neural network (CNN), a recurrent neural network (RNN), a restricted Boltzmann machine (RBM), a deep belief network (DBN), a bi-directional recurrent deep neural network (BRDNN), and/or deep Q-networks). Alternatively, the electronic device 101 according to an embodiment of the disclosure may determine a specific task using a result learned based on a final result (e.g., saving a video made by the user to a gallery application) according to performance of the plurality of functions. The electronic device 101 according to an embodiment of the disclosure may determine, in operation 440, that the plurality of functions are functions associated with each other for performing one task. For example, the electronic device 101 according to an embodiment of the disclosure may determine that the "video recording function," the "augmented reality camera function," the "filter function," and the "caption function" are a plurality of functions required for "video making." The operation 440 according to an embodiment of the disclosure may be performed when a task analysis history is not present in operation 430. According to an embodiment of the disclosure, when a task analysis history is present, the plurality of functions may be stored in the electronic device 101 and/or the server to be associated with the task determined according to the task analysis history.

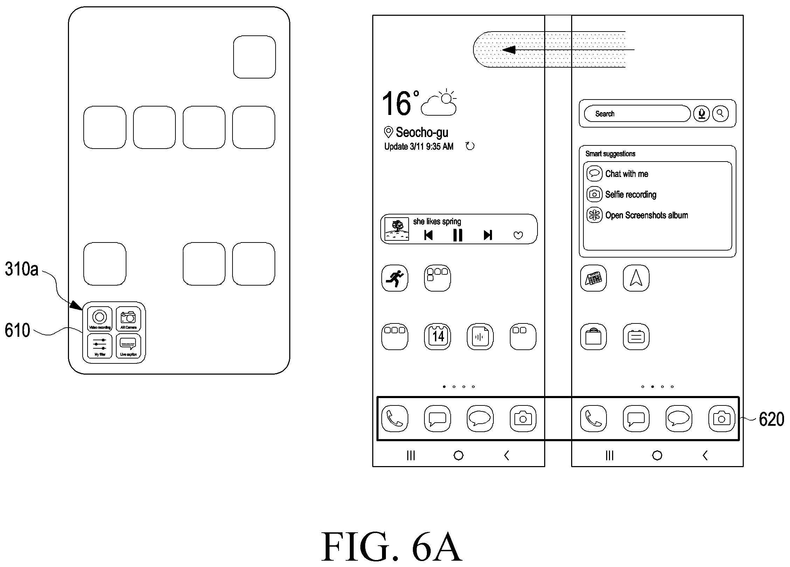

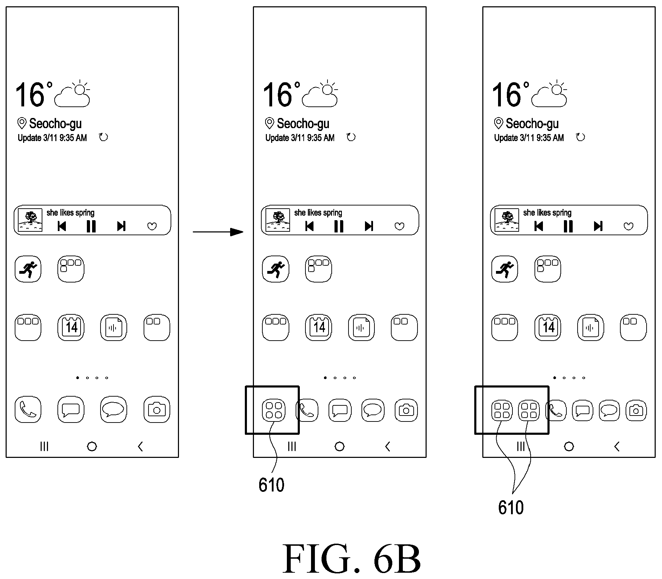

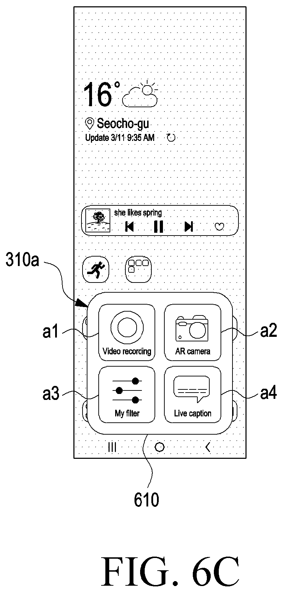

Returning to FIG. 2, the electronic device 101 according to an embodiment of the disclosure may obtain, in operation 220, a first user input for one function among the plurality of functions via a touch screen display (e.g., the display module 160). The electronic device 101 according to an embodiment of the disclosure may obtain a touch gesture of the user on a specific shortcut icon 310a (e.g., a shortcut icon for executing a video recording function). The plurality of functions according to an embodiment of the disclosure may be grouped and displayed on a specified screen (e.g., a home screen). As illustrated in FIG. 6A, a shortcut icon 310a respectively indicating the plurality of functions according to an embodiment of the disclosure may be included in one folder 610 and displayed on a specified screen (e.g., a home screen). The electronic device 101 according to an embodiment of the disclosure may display the plurality of grouped functions (e.g., the folder 610) in a specified area (e.g., a hot seat area 620) of the home screen, as illustrated in FIG. 6B. The hot seat area 620 according to an embodiment of the disclosure may refer to an area that remains fixed and displayed at the lower surface of the home screen even when the user switches the home screen from the current screen to another screen. The electronic device 101 according to an embodiment of the disclosure may display up to two folders 610 in the hot seat area 620, but this is exemplary. The number of folders 610 displayable in the hot seat area 620 according to an embodiment of the disclosure may be predetermined or set by the user. As illustrated in FIG. 6C, by displaying the shortcut icon 310a in order of usage frequency ranking based on a ranking of usage frequency for the plurality of functions used to perform a specific task, the electronic device 101 according to an embodiment of the disclosure may display a shortcut icon a1 indicating the video recording function, a shortcut icon a2 indicating the augmented reality camera function, a shortcut icon a3 indicating the filter function, and a shortcut icon a4 indicating the caption function in order. Accordingly, a technical effect of enabling the user of the electronic device 101 to intuitively recognize a function most frequently used to perform a task among the plurality of functions may be achieved. For example, through the function or operation as illustrated in FIG. 6C, the user of the electronic device 101 may intuitively recognize that the video recording function is most frequently used for video making. The electronic device 101 according to an embodiment of the disclosure may arrange and display the plurality of functions in order of usage for achieving the purpose of a specific task. For this purpose, the electronic device 101 according to an embodiment of the disclosure may store information on the usage order of the plurality of functions in the electronic device 101 and/or the server.

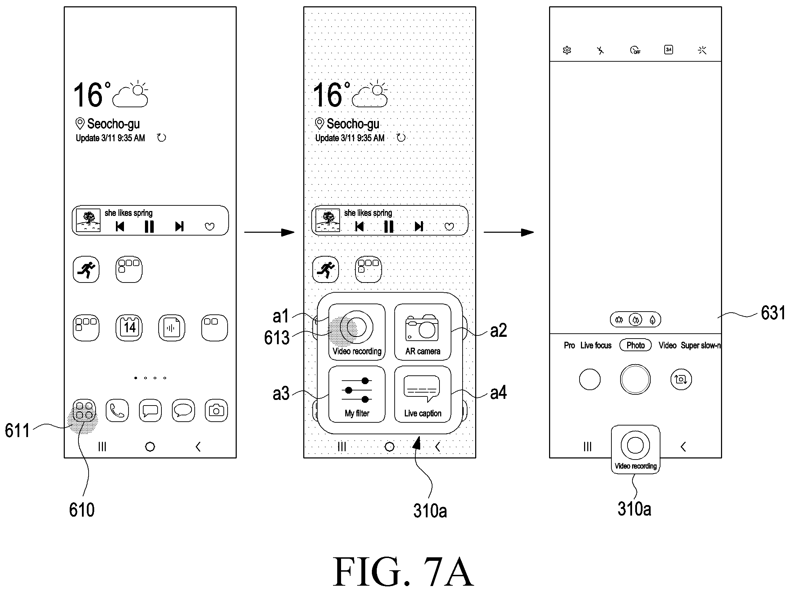

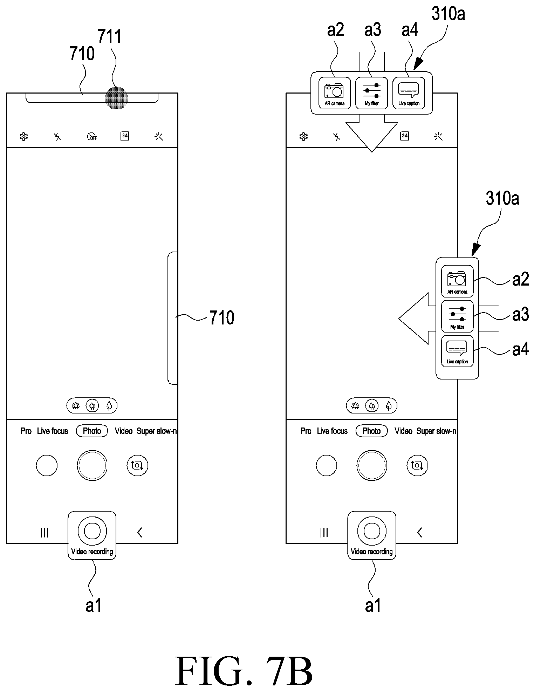

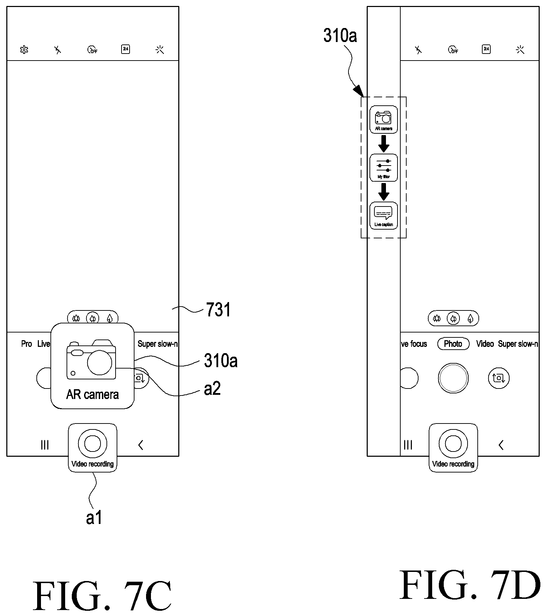

The electronic device 101 according to an embodiment of the disclosure may display, in operation 230, a first execution screen (e.g., an execution screen for an augmented reality camera function among screens for various functions provided by a camera application) related to one function (e.g., the augmented reality camera function) on a touch screen display (e.g., the display module 160) based on a user input according to operation 220. The electronic device 101 according to an embodiment of the disclosure may display a function other than one currently executing function among the plurality of functions as a specified first visual object (e.g., a shortcut icon) via a touch screen display (e.g., the display module 160). FIG. 7A is an example view illustrating a function or operation in which a specified function (e.g., a video recording function) is executed according to a selection input for the specified function (e.g., the video recording function) according to an embodiment of the disclosure. FIG. 7B is an example view illustrating a function or operation in which a function (e.g., the "augmented reality camera function," the "filter function," and the "caption function") other than a currently executing function (e.g., the video recording function) among a plurality of grouped functions is displayed according to a user input according to an embodiment of the disclosure. FIG. 7C is an example view illustrating a function or operation in which an icon indicating a function (e.g., the "augmented reality camera function," the "filter function," and the "caption function") other than a currently executing function among a plurality of grouped functions is provided in a floating manner according to an embodiment of the disclosure. FIG. 7D is an example view illustrating a function or operation in which an icon indicating a function (e.g., the "augmented reality camera function," the "filter function," and the "caption function") other than a currently executing function among a plurality of grouped functions is displayed according to an embodiment of the disclosure. Referring to FIG. 7A, the electronic device 101 according to an embodiment of the disclosure may obtain a user input 611 (e.g., a touch gesture) on the folder 610. Based on obtaining the user input 611 (e.g., a touch gesture) on the folder 610, the electronic device 101 according to an embodiment of the disclosure may enlarge and display the folder 610 as illustrated in FIG. 7A. When the electronic device 101 according to an embodiment of the disclosure obtains a user input 613 on a shortcut icon a1 indicating a specific function among the enlarged folder, the electronic device 101 may display an execution screen 631 (e.g., an execution screen of a camera application) for the specific function selected by the user. Referring to FIG. 7B, the electronic device 101 according to an embodiment of the disclosure may display a sidebar 710 while displaying the execution screen for the specific function. The electronic device 101 according to an embodiment of the disclosure may display the sidebar 710 on a side edge or a portion of the display. When the electronic device 101 according to an embodiment of the disclosure obtains a user input 711 (e.g., an edge flick gesture) on the sidebar 710, the electronic device 101 may display shortcut icons a2, a3, and a4 indicating a function (e.g., the "augmented reality camera function," the "filter function," and the "caption function") other than the currently executing function. Referring to FIG. 7C, when a specified time elapses after displaying an execution screen 731 for a specific function, the electronic device 101 according to an embodiment of the disclosure may display a shortcut icon 310a indicating a function (e.g., the "augmented reality camera function," the "filter function," and/or the "caption function") other than the currently executing function in a floating manner (e.g., overlapping the execution screen). For example, the electronic device 101 according to an embodiment of the disclosure may display a shortcut icon 310a for one function having the highest execution frequency ranking among functions (e.g., the "augmented reality camera function," the "filter function," and/or the "caption function") other than the currently executing function, or may display a shortcut icon 310a for a function of the next order based on information on the usage order stored in the electronic device 101 and/or the server. As illustrated in FIG. 7D, the electronic device 101 according to an embodiment of the disclosure may display, together with an execution screen for a currently executing function, a shortcut icon 310a indicating functions according to an execution frequency ranking of functions (e.g., the "augmented reality camera function," the "filter function," and/or the "caption function") other than the currently executing function. The electronic device 101 according to an embodiment of the disclosure may display a shortcut icon 310a indicating functions according to an execution frequency ranking of functions (e.g., the "augmented reality camera function," the "filter function," and/or the "caption function") other than the currently executing function in a menu bar form in a partial edge area of the display. Alternatively, the electronic device 101 according to an embodiment of the disclosure may display a shortcut icon 310a indicating functions according to the usage order.

The electronic device 101 according to an embodiment of the disclosure may predict and provide a next task (e.g., the "caption function") related to one context of use (e.g., video making) according to a behavior pattern of the user. For example, when a specified time elapses from a point in time when the corresponding function (e.g., the "filter function") is executed, the electronic device 101 according to an embodiment of the disclosure may visually, tactilely, and/or audibly emphasize a visual element (e.g., an icon) indicating a next task (e.g., the "caption function") to provide the next task to the user so that seamless transition between tasks is possible. The electronic device 101 according to an embodiment of the disclosure may learn a behavior pattern of the user and visually, tactilely, and/or audibly emphasize a visual element (e.g., an icon) indicating a next task (e.g., the "caption function") using a result of the learning to provide the next task to the user so that seamless transition between tasks is possible. For example, when learning that a user transitions to a next function after using a specific element (e.g., "change to bright screen") of the corresponding function (e.g., the "filter function"), the electronic device 101 according to an embodiment of the disclosure may visually, tactilely, and/or audibly emphasize a visual element (e.g., an icon) indicating a next task (e.g., the "caption function") after using the specific element (e.g., "change to bright screen") based on such learned result to provide the next task to the user so that seamless transition between tasks is possible. Alternatively, when learning that a user transitions to a next function after using a specific number of elements (e.g., "change to bright screen") of the corresponding function (e.g., the "filter function"), the electronic device 101 according to an embodiment of the disclosure may visually, tactilely, and/or audibly emphasize a visual element (e.g., an icon) indicating a next task (e.g., the "caption function") after using the specific number of elements (e.g., "change to bright screen") based on such learned result to provide the next task to the user so that seamless transition between tasks is possible.

When a plurality of applications commonly support one function (e.g., the "filter function"), the electronic device 101 according to an embodiment of the disclosure may determine one specific application based on an application execution history of the user, and then provide a function related to the determined application as a function related to the context of use to the user. For example, when identifying that the "filter function" is commonly supported by a camera application, an SMS application, and a video call application, the electronic device 101 according to an embodiment of the disclosure may identify which application is most frequently used for one context of use (e.g., video making). For example, when identifying that the camera application is used with the highest proportion among the camera application, the SMS application, and the video call application, the electronic device 101 according to an embodiment of the disclosure may determine the "filter function" provided by the camera application as the plurality of functions displayed via the touch screen display.

Although not illustrated in FIGS. 7A to 7D, the electronic device 101 according to an embodiment of the disclosure may display at least one visual object for skipping a function of the next order (e.g., the "filter function") and executing the next function around an icon corresponding to each function. Based on obtaining an input on the at least one visual object from the user, the electronic device 101 according to an embodiment of the disclosure may execute the next function (e.g., display an application execution screen for the corresponding function) without executing the corresponding function.

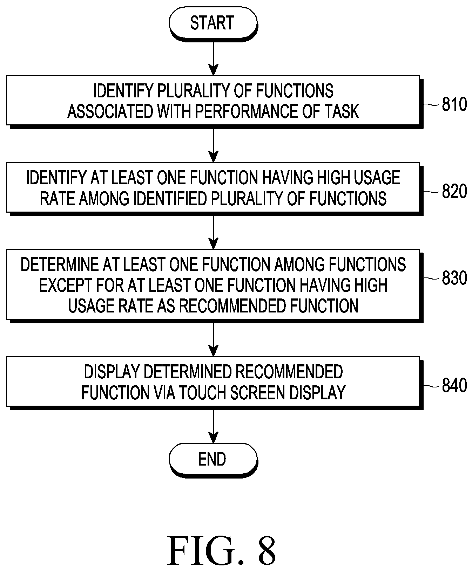

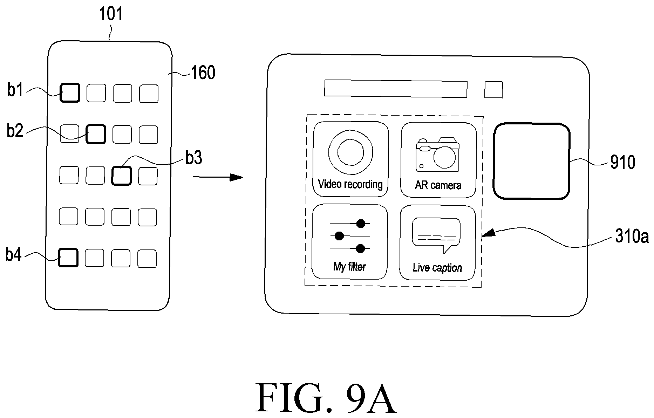

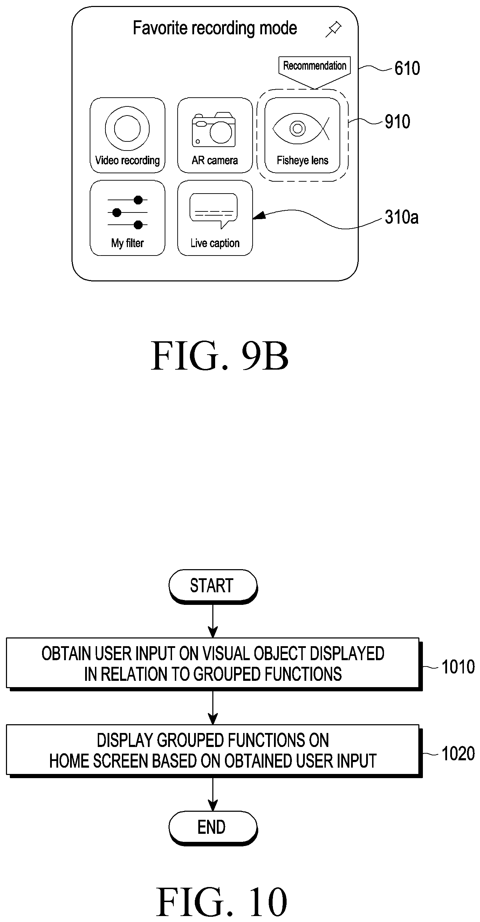

FIG. 8 is an example view illustrating a function or operation in which an electronic device 101 according to an embodiment of the disclosure provides a recommended function based on a usage frequency of a specified function. FIGS. 9A and 9B are example views illustrating the function or operation illustrated in FIG. 8 from a user interface perspective.

Referring to FIGS. 8, 9A, and 9B, the electronic device 101 according to an embodiment of the disclosure may identify, in operation 810, the plurality of functions associated with performance of the task. The electronic device 101 according to an embodiment of the disclosure may identify, as the plurality of functions associated with performance of the task, not only functions (e.g., the "video recording function," the "augmented reality camera function," the "filter function," and the "caption function") actually executed by the user more than a specified number of times (e.g., two times) but also functions not used by the user or used less than the specified number of times. The electronic device 101 according to an embodiment of the disclosure may determine that a specific function is the plurality of functions associated with performance of the task using metadata of the specific function. Alternatively, the electronic device 101 according to an embodiment of the disclosure may determine that a specific function is the plurality of functions associated with performance of the task based on usage history information of another user transmitted from an external device (e.g., a server). Alternatively, the electronic device 101 according to an embodiment of the disclosure may determine that a specific function is the plurality of functions associated with performance of the task using information stored by a user setting.

The electronic device 101 according to an embodiment of the disclosure may identify, in operation 820, at least one function (e.g., the "video recording function," the "augmented reality camera function," the "filter function," and the "caption function") having a high usage rate among the plurality of functions. The electronic device 101 according to an embodiment of the disclosure may identify at least one function having a usage frequency greater than or equal to a specified number of times among the plurality of functions identified according to operation 810.

The electronic device 101 according to an embodiment of the disclosure may determine, in operation 830, at least one function among functions except for the at least one function having a high usage rate as a recommended function. The electronic device 101 according to an embodiment of the disclosure may determine a function (e.g., a fisheye lens function) having a usage frequency less than a specified number of times as a recommended function 910. In this case, the electronic device according to an embodiment of the disclosure may determine all functions having a usage frequency less than a specified number of times as the recommended function 910, or may determine at least one function having the lowest usage frequency as the recommended function 910. When receiving analysis information analyzing a function frequently used by other users from a store from which an application may be downloaded, the electronic device 101 according to an embodiment of the disclosure may determine the recommended function 910 based on the analysis information received from the store. The electronic device 101 according to an embodiment of the disclosure may display, in operation 840, the determined recommended function 910 via a touch screen display (e.g., the display module 160). As illustrated in FIGS. 9A and 9B, the electronic device 101 according to an embodiment of the disclosure may display shortcut icons b1, b2, b3, and b4 corresponding to the recommended function 910 in the folder 610. The folder 610 according to an embodiment of the disclosure may also be provided as one application. In this case, the electronic device 101 according to an embodiment of the disclosure may newly generate an application for displaying and executing the plurality of functions/tasks and display the application via the touch screen display.

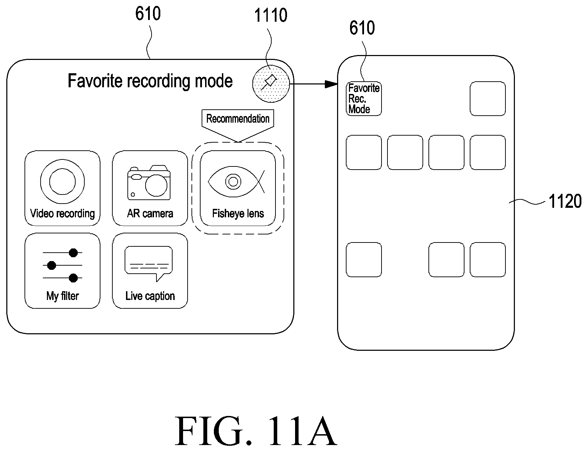

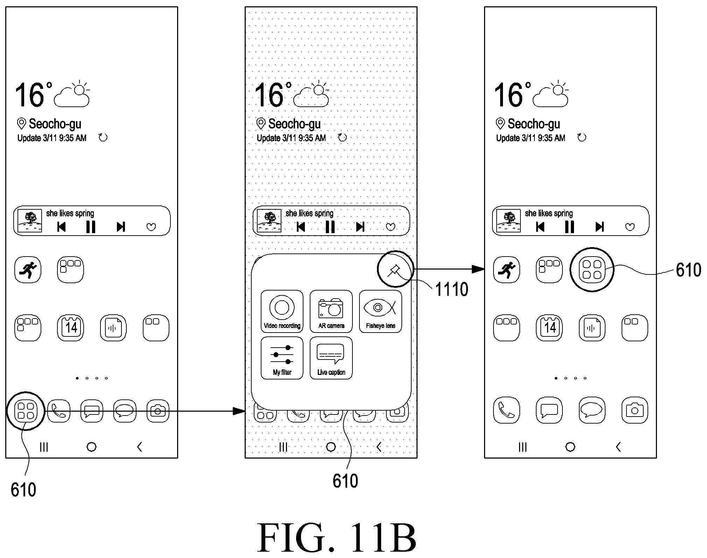

FIG. 10 is an example view illustrating a function or operation in which an electronic device 101 according to an embodiment of the disclosure displays a plurality of grouped functions in an area other than a specified area of a home screen on the home screen based on a user input for the plurality of grouped functions. FIGS. 11A and 11B are example views illustrating the function or operation illustrated in FIG. 10 from a user interface perspective.

Referring to FIGS. 10, 11A, and 11B, the electronic device 101 according to an embodiment of the disclosure may obtain, in operation 1010, a user input on a visual object 1110 displayed in relation to the grouped functions. The visual object 1110 according to an embodiment of the disclosure may include a pin-shaped user interface, but the disclosure is not limited thereto.

The electronic device 101 according to an embodiment of the disclosure may display, in operation 1020, the grouped functions on a home screen 1120 based on the obtained user input. Based on obtaining the user input on the visual object 1110, the electronic device 101 according to an embodiment of the disclosure may display the folder 610 in an area other than the hot seat area 620. Accordingly, when the home screen is switched to a screen different from the currently displayed home screen according to a user input for switching the home screen, the folder 610 may not be displayed.

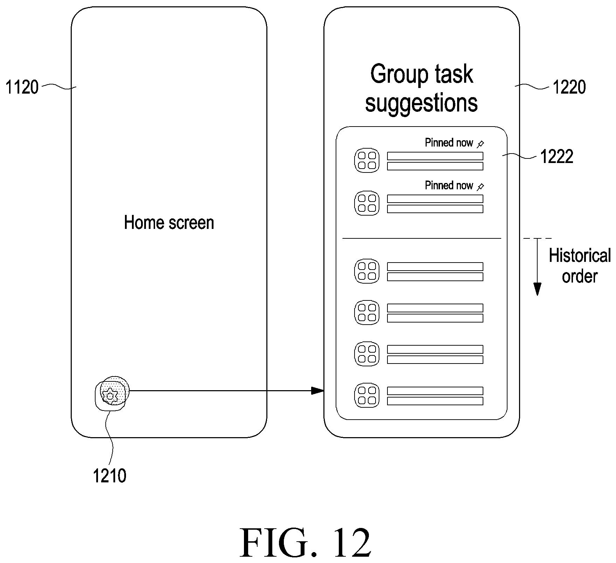

FIG. 12 is an example view illustrating a function or operation in which an electronic device 101 according to an embodiment of the disclosure displays a provision history for a plurality of grouped functions. Referring to FIG. 12, the electronic device 101 according to an embodiment of the disclosure may display a settings application execution screen 1220 based on a user input on a settings icon 1210. The electronic device 101 according to an embodiment of the disclosure may display folders that were displayed in an area other than the hot seat area 620 of the home screen in chronological order via the settings application execution screen 1220. Through a user input on the visual object 1110 displayed on the settings application execution screen 1220, the electronic device 101 according to an embodiment of the disclosure may display the folder 610 in an area other than the hot seat area 620 of the home screen.

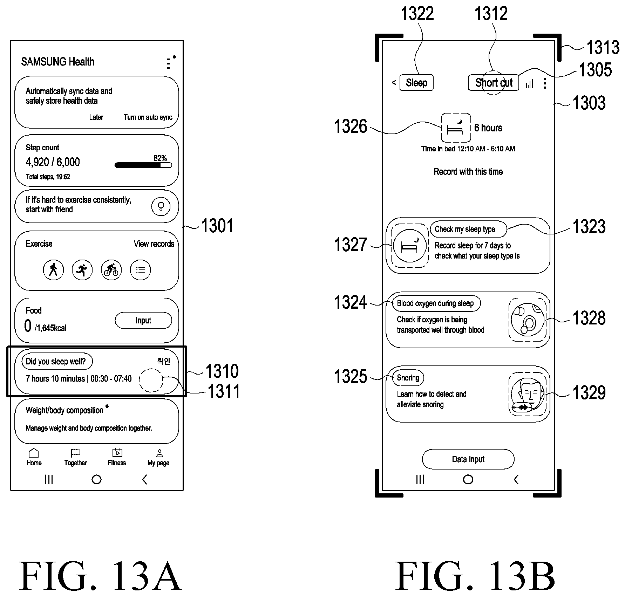

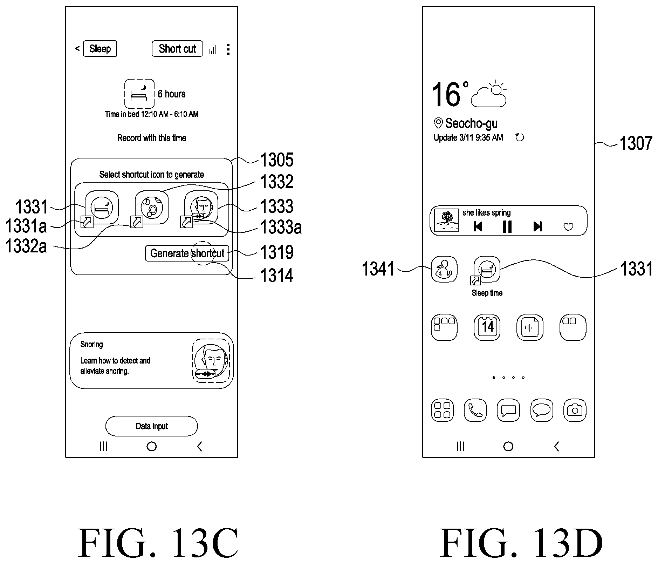

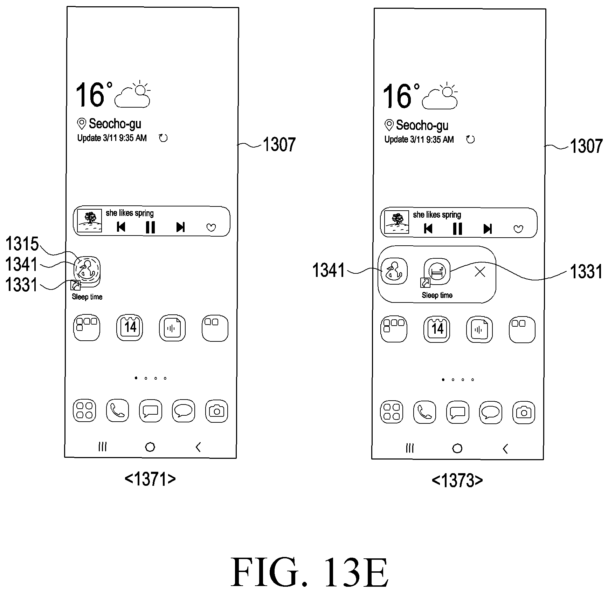

FIGS. 13A, 13B, 13C, 13D, and 13E are example views illustrating an operation in which an electronic device 101 according to an embodiment of the disclosure generates and arranges a shortcut icon according to a user input. As illustrated in FIG. 13A, the electronic device 101 according to an embodiment of the disclosure may identify a user input 1311 on a specific function 1310 (e.g., a sleep-related function) on an execution screen 1301 of a health application. As illustrated in FIG. 13B, the electronic device 101 according to an embodiment of the disclosure may display an execution screen 1303 of the specific function 1310 according to the user input 1311 on the specific function 1310 (e.g., the sleep-related function). When receiving a user input 1312 on a visual object 1305 for generating a shortcut icon displayed on the execution screen 1303 of the specific function 1310, the electronic device 101 according to an embodiment of the disclosure may capture 1313 the execution screen 1303 of the specific function 1310 and recognize text objects 1322, 1323, 1324, and 1325 and image objects 1326, 1327, 1328, and 1329 using an optical character reader (OCR) function on a captured image capturing the execution screen 1303 of the specific function 1310. Alternatively, when receiving a user input (e.g., a long press) on a visual object 1305 for generating a shortcut icon displayed on the execution screen 1303 of the specific function 1310, the electronic device 101 according to an embodiment of the disclosure may display a shortcut generation menu bar including candidate shortcut icon objects selectable by the user.

The electronic device 101 according to an embodiment of the disclosure may analyze text objects 1322, 1323, 1324, and 1325 and image objects 1327, 1328, and 1329 recognized through an optical character reader (OCR) function, an execution screen of a specific function, link information of the specific function, and a view constraint using an artificial intelligence model (e.g., generative artificial intelligence (AI)), and generate a shortcut icon based on the analysis result. For example, when a captured image capturing the execution screen 1303 of the specific function 1310 is lower than a utilization level according to a view constraint for generating a shortcut icon, the artificial intelligence model (e.g., generative artificial intelligence (AI)) according to an embodiment of the disclosure may generate and provide a new shortcut icon not in the captured image based on collected data. For example, the artificial intelligence model (e.g., generative artificial intelligence (AI)) according to an embodiment of the disclosure may generate and provide a shortcut label corresponding to a shortcut icon based on an analysis result of text objects 1322, 1323, 1324, and 1325. As illustrated in FIG. 13C, the electronic device 101 according to an embodiment of the disclosure may display a popup window 1305 including candidate shortcut icons 1331, 1332, and 1333 generated using an artificial intelligence model (e.g., generative artificial intelligence (AI)). The electronic device 101 according to an embodiment of the disclosure may display an identifier 1331a, 1332b, or 1333c visually distinguishable from an icon corresponding to an application on at least a portion of each of the candidate shortcut icons 1331, 1332, and 1333 provided in the popup window 1305. For example, the electronic device 101 according to an embodiment of the disclosure displays the identifiers 1331a, 1332b, and 1333c in an arrow shape, but may visually display the identifiers in various ways such as displaying an icon corresponding to an application (e.g., a health application) in a decreased size. When a user input 1314 on a shortcut icon generation button 1319 is received after a first shortcut icon 1331 is selected among the candidate shortcut icons 1331, 1332, and 1333, the electronic device 101 according to an embodiment of the disclosure may display the first shortcut icon 1331 at a position adjacent to an icon 1341 corresponding to the health application on a home screen 1307 as illustrated in FIG. 13D. The electronic device 101 according to an embodiment of the disclosure may switch to the home screen 1307 upon generation of the first shortcut icon 1331 to display the first shortcut icon 1331 on the home screen 1307, or may display the first shortcut icon 1331 when switching to the home screen 1307 by a user selection. Alternatively, as illustrated in the screen <1371> of FIG. 13E, when a user input 1314 on the shortcut icon generation button 1319 is received after the first shortcut icon 1331 is selected, the electronic device 101 according to an embodiment of the disclosure may display an icon 1341 corresponding to the health application and the first shortcut icon 1331 overlapping on the home screen 1307. For example, the electronic device 101 according to an embodiment of the disclosure may position the first shortcut icon 1331 below the icon 1341 corresponding to the health application to display and arrange the icons overlapping while displaying a minimum area. As illustrated in the screen <1373> of FIG. 13E, when a user input 1315 is received while displaying the icon 1341 corresponding to the health application and the first shortcut icon 1331 overlapping, the electronic device 101 according to an embodiment of the disclosure may align and display the first shortcut icon 1331 at a position adjacent to the icon 1341 corresponding to the health application. When the electronic device 101 according to an embodiment of the disclosure identifies a position movement of the first shortcut icon 1331 by the user, the electronic device 101 may ignore the input for the position movement by the user and display the first shortcut icon 1331 at a position adjacent to the icon 1341 corresponding to the health application. Alternatively, when identifying a position movement of the first shortcut icon 1331 by the user, the electronic device 101 according to an embodiment of the disclosure may move and display the first shortcut icon 1331 and the icon 1341 corresponding to the health application together. The electronic device 101 according to an embodiment of the disclosure may display an execution screen executed by selection of the icon 1341 corresponding to the health application and an execution screen executed by selection of the first shortcut icon 1331 identically or differently according to a setting.

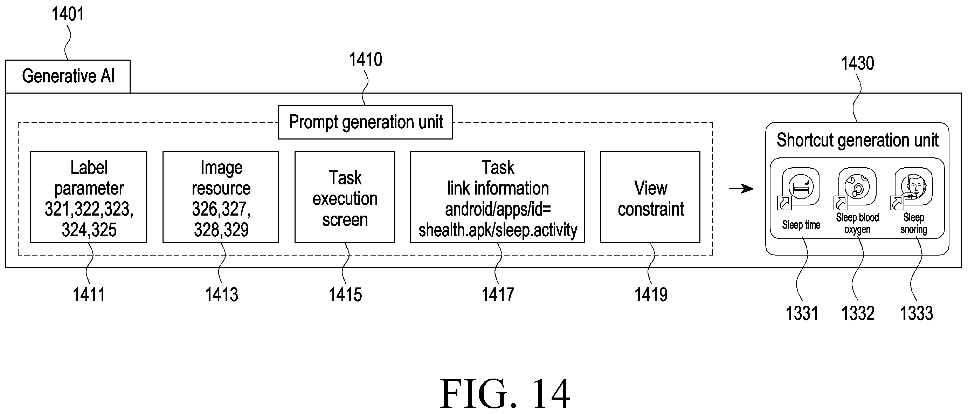

FIG. 14 is an example view illustrating an operation in which an electronic device 101 according to an embodiment of the disclosure generates a shortcut icon using artificial intelligence. Referring to FIG. 14, an artificial intelligence model (e.g., generative AI 1401 (artificial intelligence)) for generating a shortcut icon according to an embodiment of the disclosure may include a prompt generation unit 1410 and a shortcut generation unit 1430. The prompt generation unit 1410 according to an embodiment of the disclosure may collect a label parameter 1411, an image source 1413, an execution screen 1415 of a task (function), link information 1417 of a task (function), and a view constraint 1419 to generate an AI prompt for generating a shortcut icon. The prompt generation unit 1410 according to an embodiment of the disclosure may extract a label parameter 1411 (e.g., text data and main keywords) (e.g., the text objects 1322, 1323, 1324, and 1325 of FIG. 13B) from a captured image capturing an image corresponding to an execution screen on the electronic device. Here, the label may indicate a name of the shortcut icon. The prompt generation unit 1410 according to an embodiment of the disclosure may crop and extract an image source 1413 (e.g., the image objects 1327, 1328, and 1329 of FIG. 13D) from the captured execution screen image, and extract link information 1417 (e.g., android/apps/id=shealth.apk/sleep.activity) of a task defined in the health application. The prompt generation unit 1410 according to an embodiment of the disclosure may check, as a view constraint 1419, a task icon request count, a label parameter priority, a summary label character limit, a utilization setting level for a captured image of a task execution screen, and presence or absence of a generative image. The view constraint 1419 may be preset or set by the user. The shortcut generation unit 1430 according to an embodiment of the disclosure may determine candidate shortcut icons (e.g., 1331, 1332, and 1333 of FIG. 13C) based on the view constraint 1419 among a plurality of shortcut icons based on information on the label parameter 1411, the image source 1413, the execution screen 1415 of a task (function), the link information 1417 of a task (function), and the view constraint 1419 received from the prompt generation unit 1410.

An electronic device according to an embodiment of the disclosure includes a touch screen display and at least one processor, wherein the at least one processor displays a plurality of functions executable by at least one application via the touch screen display, the plurality of functions include a function executed in relation to a task at least once for performing one task, obtains a first user input for one function among the plurality of functions via the touch screen display, and is configured to display a first execution screen related to the one function on the touch screen display based on the first user input, and at least one function other than the one function among the plurality of functions may be displayed as a specified first visual object via the touch screen display while the first execution screen related to the one function is displayed.

A method of controlling an electronic device according to an embodiment of the disclosure includes an operation of displaying a plurality of functions executable by at least one application via a touch screen display of the electronic device, wherein the plurality of functions include a function executed in relation to a task at least once for performing one task, an operation of obtaining a first user input for one function among the plurality of functions via the touch screen display, and an operation of displaying a first execution screen related to the one function on the touch screen display based on the first user input, and at least one function other than the one function among the plurality of functions may be displayed as a specified first visual object via the touch screen display while the first execution screen related to the one function is displayed.

The electronic device according to various embodiments of the disclosure may be one of various types of electronic devices. The electronic devices may include, for example, a portable communication device (e.g., a smart phone), a computer device, a portable multimedia device, a portable medical device, a camera, a wearable device, or a home appliance. The electronic device according to an embodiment of the disclosure is not limited to the above-described devices.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2540) including one or more instructions that are stored in a storage medium (e.g., internal memory 2536 or external memory 2538) that is readable by a machine (e.g., the electronic device 2501). For example, a processor of the machine (e.g., the electronic device 2501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, each component (e.g., a module or a program) of the above-described components may include a single entity or multiple entities. Some of the plurality of entities may be separately disposed in different components. According to an embodiment of the disclosure, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment of the disclosure, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
memory,
a touch screen display, and
at least one processor,
wherein the memory stores a plurality of instructions that, when executed by the at least one processor, cause the electronic device to:
display, via the touch screen display, a plurality of tasks executable by at least one application, wherein the plurality of tasks are displayed as a visual object indicating a task executed in relation to a context of use at least once according to the context of use of a user for the electronic device,
obtain, via the touch screen display, a first user input for one task among the plurality of tasks, and
based on the first user input, display, via the touch screen display, a first execution screen related to the one task, wherein at least one task other than the one task among the plurality of tasks is displayed as a specified first visual object via the touch screen display while the first execution screen related to the one task is displayed.

2. The electronic device of claim 1, wherein the plurality of tasks are grouped and displayed via the touch screen display.

3. The electronic device of claim 1, wherein the plurality of tasks are grouped and displayed via the touch screen display.

4. The electronic device of any one of claims 1 to 3, wherein the specified first visual object includes an icon indicating the at least one task.

5. The electronic device of any one of claims 1 to 4, wherein the plurality of instructions further include an instruction that causes the electronic device to display a task other than the plurality of tasks as a recommended task via the touch screen display.

6. The electronic device of any one of claims 1 to 5, wherein the plurality of instructions further include an instruction that causes the electronic device to control the touch screen display to display the plurality of icons respectively representing the grouped plurality of tasks on a home screen, based on a second user input for the grouped plurality of tasks.

7. The electronic device of any one of claims 1 to 6, wherein the plurality of instructions further include an instruction that causes the electronic device to group the recommended task with the plurality of tasks and display the grouped recommended task and the plurality of tasks via the touch screen display.

8. The electronic device of any one of claims 1 to 7, wherein the plurality of instructions further include an instruction that causes the electronic device to display, on the plurality of icons, a specified second visual object indicating an order in which the plurality of icons have been frequently used.

9. The electronic device of any one of claims 1 to 8, wherein the plurality of instructions further include an instruction that causes the electronic device to display an icon indicating at least one task other than the one task in a floating manner, when a first specified time elapses after displaying the first execution screen.

10. The electronic device of any one of claims 1 to 9, wherein the plurality of instructions further include an instruction that causes the electronic device to display a second execution screen for performing at least one task other than the one task, when a second specified time elapses after the first execution screen is displayed.

11. A computer-readable non-transitory recording medium, wherein the non-transitory recording medium stores a plurality of instructions that, when executed by a processor of an electronic device, cause the electronic device to:
display, via a touch screen display of the electronic device, a plurality of tasks executable by at least one application, wherein the plurality of tasks are displayed as a visual object indicating a task executed in relation to a task (context of use) at least once for performing the task;
obtain, via the touch screen display, a first user input for one task among the plurality of tasks; and
based on the first user input, display, via the touch screen display, a first execution screen related to the one task, wherein at least one task other than the one task among the plurality of tasks is displayed as a specified first visual object via the touch screen display while the first execution screen related to the one task is displayed.

12. The non-transitory recording medium of claim 11, wherein the plurality of tasks are grouped and displayed via the touch screen display.

13. The non-transitory recording medium of claim 11 or 12, wherein the plurality of tasks are displayed as a plurality of icons respectively representing the plurality of tasks.

14. The non-transitory recording medium of any one of claims 11 to 13, wherein the specified first visual object includes an icon indicating the at least one task.

15. The non-transitory recording medium of any one of claims 11 to 14, wherein the plurality of instructions further include an operation causing the electronic device to display a task other than the plurality of tasks as a recommended task via the touch screen display.
